# EUROPÄISCHE PATENTANMELDUNG

(11) **EP 4 733 484 A1**
(43) Veröffentlichungstag der Anmeldung: **29.04.2026**
(21) Anmeldenummer: 24208941.5
(22) Anmeldetag: 25.10.2024
(51) Int. Cl.: E02F 3/34, B60R 21/13, E02F 3/627, E02F 9/16

(54) **FRONTLADER, ARBEITSFAHRZEUG, SCHUTZBÜGEL, ARBEITSFAHRZEUGKOMBINATION UND GRUPPE VON ARBEITSFAHRZEUGKOMBINATIONEN**

(71) Anmelder: Wilhelm Stoll Maschinenfabrik GmbH, 38268 Lengede/Broistedt (DE)
(72) Erfinder: FLÖTZINGER, Ulrich, 59846 Sundern (Sauerland) (DE)
(74) Vertreter: REHBERG HÜPPE + PARTNER

(57) **Zusammenfassung**

Die Erfindung betrifft einen Frontlader (3). An der Säule (11) des Frontladers (3) ist ein Schutzbügel (6) gehalten. Der Schutzbügel (6) erstreckt sich von einer Schwenkachse der Schwinge (13) nach oben und hinten. Der Schutzbügel (6) ist eingerichtet dazu, eine Bedienungsperson des Arbeitsfahrzeugs, an dem der Frontlader (3) montiert ist, gegenüber von einem Arbeitswerkzeug herunterfallendem Stückgut zu schützen, wenn die Schwinge (13) angehoben ist. Dies ist insbesondere erforderlich, wenn das Arbeitsfahrzeug keine geschlossene Fahrerkabine aufweist. Eine alternative Lösung betrifft die Ausstattung eines Arbeitsfahrzeugs mit einem Schutzbügel, wobei der Schutzbügel klappbar sein kann zwischen einer Schutzstellung und einer Vorratsstellung.

## Beschreibung

### TECHNISCHES GEBIET DER ERFINDUNG

Die Erfindung betrifft Frontlader, welche an einem Arbeitsfahrzeug (insbesondere einem Traktor), befestigt werden können und an denen ein Arbeitswerkzeug angebracht, gehoben, abgesenkt, gekippt und/oder anderweitig betätigt und betrieben werden kann. Derartige Frontlader verfügen über eine Säule, die auch als Befestigungseinrichtung oder als Koppelturm bezeichnet wird. Die Säule stellt einen Kopplungsbereich bereit, über den der Frontlader lösbar mit einem Kopplungsbereich eines Anbauturms des Arbeitsfahrzeugs gekoppelt werden kann, sodass das Arbeitsfahrzeug bedarfsgerecht mit dem Frontlader, mit einem anderen Frontlader, einem anderen Anbaugerät oder ohne Frontlader betrieben werden kann.

Des Weiteren betrifft die Erfindung ein Arbeitsfahrzeug, welches mit einem Frontlader ausgestattet werden kann. Die Erfindung betrifft auch einen Schutzbügel. Die Erfindung betrifft des Weiteren eine Arbeitsfahrzeugkombination mit einem Arbeitsfahrzeug und einem daran montierten Frontlader. Schließlich betrifft die Erfindung auch eine Gruppe von derartigen Arbeitsfahrzeugkombinationen, wobei diese Gruppe dann zwei unterschiedliche Teilgruppen aufweist.

### STAND DER TECHNIK

Beim Einsatz von Frontladern besteht ein Risiko, dass beim Handhaben (insbesondere beim Anheben und/oder beim Transportieren) von großem schwerem Stückgut das Stückgut aus einer angehobenen Position herunterfällt und die Bedienungsperson des Arbeitsfahrzeuges gefährdet. Erfolgt mit dem Frontlader beispielsweise ein Anheben eines als (Stroh-)Ballen ausgebildeten Stückguts, kann sich der Ballen ungewollt von dem Arbeitswerkzeug des Frontladers

(insbesondere einer Gabel, einer Aufnahme oder einer Halteeinrichtung) lösen und herunterfallen und/oder entlang der dann nach hinten geneigten Schwinge in Richtung der Bedienungsperson rollen. Während für einige Typen der Arbeitsfahrzeuge die Bedienungsperson noch über die Fahrerkabine geschützt ist, besteht bspw. für Arbeitsfahrzeuge, die als Traktoren ohne geschlossene Fahrerkabine ausgebildet sind, die Gefahr, dass der Ballen ungehindert auf die Bedienungsperson trifft, was bereits zu Todesfällen geführt hat.

Aus diesem Grund soll zukünftig eine europäische Norm verabschiedet werden, die auf eine Erhöhung der Sicherheit von Frontladern abzielt. Gemäß einem Entwurf dieser Norm mit der Bezeichnung "prEN 12525:2024 D" vom September 2024 werden Schutzeinrichtungen für Bedienungspersonen gefordert, die auch als "Operator Protective Guards" (Abkürzung OPG) bezeichnet werden und als starre oder selbsteinstellende Schutzeinrichtung zum Schutz der Bedienungsperson vor Stückgut, das vom Arbeitswerkzeug herabfallen und/oder die Schwinge des Frontladers entlangrollen könnte, ausgebildet sind.

In dem Entwurf der europäischen Norm wird gefordert, dass die Schutzeinrichtung dauerhaft am Frontlader angebracht oder nur mit einem Werkzeug demontierbar sein darf. Verfügt der Frontlader über eine Schutzeinrichtung, kann der Frontlader an Traktoren mit allen möglichen Konfigurationen von Umsturzschutzvorrichtungen einschließlich solcher mit zwei Pfosten angebaut werden, wobei diese Anbauoption dann in der Betriebsanleitung des Frontladers angegeben sein soll. Ist an dem Frontlader hingegen keine Schutzeinrichtung angebracht, darf der Frontlader nur an Traktoren angebaut werden, die über eine Fahrerkabine mit Umsturzschutzvorrichtung verfügen oder eine Umsturzschutzvorrichtung mit vier Pfosten aufweisen, bei der der entlang mindestens einer waagerechten Linie gemessene Abstand zwischen den Pfosten vor dem Fahrerplatz nicht größer als eine Mindestbreite (insbesondere 1.000 mm oder 1.200 mm) ist, wobei sich diese Linie in einer Höhe von 0 mm und 600 mm oberhalb der Motorhaube des Traktors befinden muss.

In einem Anhang E des Entwurfs der Norm werden Beispiele für Schutzeinrichtungen an einem Frontlader vorgeschlagen, bei denen die Schutzeinrichtung darin besteht, dass
- zwei aufeinander gestapelte Ballen nicht lediglich im Bereich des unteren Ballens mittels eines Greifers des Frontladers gegriffen und angehoben werden, sondern ein Doppelgreifer eingesetzt wird, der beide gestapelte Ballen greift, oder
- auf einer den Stapel der Ballen unterfahrenden Gabel eine vertikale Abstützfläche vorgesehen wird, an welcher die dem Arbeitsfahrzeug zugewandten Seiten der gestapelten Ballen beide abgestützt sind, oder
- eine einen Ballen anhebende Schaufel eine vertikale Abstützstrebe aufweist, an deren der Schaufel abgewandtem Endbereich ein horizontaler Abstützarm angeordnet ist, der an der Oberseite des in der Schaufel liegenden Ballens abgestützt ist.

Gemäß dem normativen Anhang G des Entwurfs der europäischen Norm soll die Schutzeinrichtung angemessen dimensioniert sein, um zu verhindern, dass ein Stückgut (z. B. ein Ballen) durch die Schutzeinrichtung hindurchtreten kann, falls dass Stückgut vom Arbeitswerkzeug in Richtung der Bedienungsperson herabfällt. Diese Anforderung soll mittels vorgeschriebener Prüfverfahren überprüft werden. Gemäß dem vorgeschlagenen Prüfverfahren darf eine Kugel, die einen Durchmesser entsprechend der Mindestbreite (insbesondere 1.000 mm oder 1.200 mm) aufweist, nicht von der Vorderseite des Frontladers durch die Schutzeinrichtung hindurch in die Freiraumzone der Bedienungsperson gelangen, wobei die Freiraumzone nach ISO 5700:2013, 9.1 festgelegt ist. Falls der Sitzindexpunkt unbekannt ist, darf die der Prüfung zugrunde gelegte Kugel nicht in eine vertikale Ebene gelangen, die 400 mm vom Drehpunkt der Schwinge des Frontladers zur Bedienungsperson hin angeordnet ist, sowie nicht in eine horizontale Ebene gelangen, die 1.000 mm oberhalb des Drehpunktes der Schwinge des Frontladers angeordnet ist. Gemäß dem Entwurf der europäischen Norm kann die Schutzeinrichtung auch mit dem vom Hersteller angegebenen Befestigungsverfahren am Traktor (oder einer repräsentativen Modellstruktur) montiert werden. Ist die Schutzeinrichtung selbsteinstellend, muss die Prüfung mit dem Frontlader in maximaler Höhe durchgeführt werden. Für das Prüfverfahren muss über die Schutzeinrichtung eine statische Last, deren Energie 5.800 J entspricht, auf die Struktur aufgebracht werden. Hierbei gilt die Belastung als statisch, wenn die Verformungsgeschwindigkeit am Lastaufbringungspunkt nicht größer als 5 m/s ist. Die statische Last soll dabei am höchsten Punkt der Schutzeinrichtung aufgebracht werden unter einem Winkel von 45° zum Boden. Schließlich soll die statische Last in Richtung des Drehpunktes des Arbeitswerkzeuges zur Bedienungsperson hin aufgebracht werden.

Von den Unternehmen ALÖ AB sowie ISEKI-Maschinenbau GmbH ist auf der Messe GaLaBau (11. bis 14.09.2024, Nürnberg) ein Prototyp einer Schutzeinrichtung vorgeschlagen worden, bei der ein Schutzbügel als Rahmenstruktur ausgebildet war. Die Rahmenstruktur war in dem oberen und hinteren Endbereich an einen Überrollbügel des Arbeitsfahrzeugs ohne Fahrerkabine angeschraubt, während der vordere und untere Endbereich der Rahmenstruktur an die beiden Anbautürme des Traktors angeschraubt war (vgl. www.iseki.de/news/galabau-2024-review-mechanik-im-herzen-ideen-im-kopf; Datum der Einsichtnahme: 21.10.2024).

### AUFGABE DER ERFINDUNG

Der Erfindung liegt die Aufgabe zugrunde,
- eine alternative Ausgestaltung und Integration eines Schutzbügels und/oder
- einen hinsichtlich Montage und Demontage verbesserten Schutzbügel und/oder
- einen hinsichtlich der Handhabung verbesserten Schutzbügel und/oder
- einen hinsichtlich der Funktion verbesserten Schutzbügel und/oder
- einen hinsichtlich der Anpassung an unterschiedliche Betriebsanforderungen verbesserten Schutzbügel und/oder
- einen hinsichtlich der Anpassbarkeit an unterschiedliche Durchfahrtshöhen verbesserten Schutzbügel
vorzuschlagen.

Des Weiteren liegt der Erfindung die Aufgabe zugrunde, einen entsprechend verbesserten Frontlader, ein entsprechend verbessertes Arbeitsfahrzeug und eine entsprechend verbesserte Arbeitsfahrzeugkombination vorzuschlagen. Schließlich liegt der Erfindung auch die Aufgabe zugrunde, eine Gruppe von Arbeitsfahrzeugkombinationen vorzuschlagen, die hinsichtlich des Fertigungsaufwandes und/oder des Lagerhaltungsaufwandes sowie hinsichtlich der Komponentenvarianten verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der unter Einbindung der Hersteller von Arbeitsfahrzeugen und Frontladern erarbeitete Entwurf der europäischen Norm geht von dem Vorurteil aus, dass dann, wenn die Schutzeinrichtung an dem Frontlader vorgesehen ist, die Schutzeinrichtung Bestandteil des Arbeitswerkzeugs, also für die angegebenen Beispiele Bestandteil des Greifers für die gestapelten Ballen, Bestandteil der Gabel, auf der der Ballen liegt, oder Bestandteil der Schaufel, in der der Ballen angeordnet ist, sein muss. Dieses Vorurteil beruht darauf, dass mit der in das Arbeitswerkzeug integrierten Schutzeinrichtung bereits das Lösen des Stückguts von dem Arbeitswerkzeug unterbunden werden soll. Andererseits gehen offensichtlich diese Lösungen gemäß dem Entwurf der europäischen Norm davon aus, dass die Schutzeinrichtung eine vorbestimmte Relativlage zu dem Arbeitswerkzeug und damit dem mit dem Arbeitswerkzeug angehobenen Stückgut aufweisen muss, um zuverlässig die Schutzfunktion zu erfüllen. Die definierte Relativlage der Schutzeinrichtung gegenüber dem angehobenen Stückgut kann nur gewährleistet werden, wenn die Schutzeinrichtung Teil des Arbeitswerkzeugs ist.

Die Erfindung wendet sich von diesem Vorurteil ab und schlägt vor, dass eine als Schutzbügel ausgebildete Schutzeinrichtung an der Säule des Frontladers, die der Kopplung des Frontladers mit dem Anbauturm des Arbeitsfahrzeugs dient, angebracht sein kann. Erfindungsgemäß wird dabei in Kauf genommen, dass sich mit dem Anheben und weiteren Handhaben des Stückguts durch den Frontlader die Relativlage zwischen der Schutzeinrichtung einerseits und dem Stückgut andererseits ändern kann. Die Erfindung nimmt unter Umständen sogar in Kauf, dass sich das Stückgut von dem Arbeitswerkzeug lösen kann und in Richtung der Bedienungsperson auf dem Fahrersitz des Arbeitsfahrzeugs bewegen kann. Auf dem Weg zu der Bedienungsperson wird aber für die erfindungsgemäße Ausgestaltung das Stückgut durch die als Schutzbügel ausgebildete Schutzeinrichtung gestoppt. Zu diesem Zweck erstreckt sich der Schutzbügel von einer Schwenkachse eines Schwenklagers, über die die Schwinge des Frontladers an der Säule gelagert ist, nach hinten und nach oben. Auf diese Weise schützt der Schutzbügel bei an dem Arbeitsfahrzeug montiertem Frontlader und angehobener Schwinge eine Bedienungsperson des Arbeitsfahrzeugs gegenüber einem von dem Arbeitswerkzeug herunterfallenden oder herunterrollenden Stückgut. Erfindungsgemäß wird somit erstmals die Säule des Frontladers multifunktional genutzt, indem die Säule nicht lediglich für die Kopplung mit dem Anbauturm des Arbeitsfahrzeugs sowie für die Lagerung der Schwinge und die Anlenkung eines Hubzylinders (und ggf. weitere an sich bekannte Funktionen) genutzt wird, sondern auch für das Halten des Schutzbügels. Hierbei kann ausgenutzt werden, dass die Säule ohnehin für die Aufnahme der gesamten, unter Umständen mit einem großen Hebelarm auf den Frontlader wirkenden hohen Lasten ausgelegt ist, sodass die Säule auch die auf den Schutzbügel von dem Stückgut aufgebrachten Beanspruchungen aufnehmen kann, womit eine zuverlässige Abstützung des Schutzbügels ohne zusätzlichen konstruktiven Aufwand möglich ist. Des Weiteren kann der an der Säule gehaltene Schutzbügel unabhängig davon genutzt werden, welcher Typ eines Arbeitswerkzeugs von dem Frontlader für ein Stückgut genutzt wird, sodass Anpassungsarbeiten für unterschiedliche Arbeitswerkzeuge nicht erforderlich sind und nicht die Ausstattung mehrerer Arbeitswerkzeuge mit Schutzeinrichtungen erforderlich ist.

Vorzugsweise erstreckt sich der Schutzbügel bis zu einer vertikalen Ebene, die 400 mm von der Schwenkachse der Schwinge und/oder bis zu einer horizontalen Ebene, die 1.000 mm oberhalb der Schwenkachse der Schwinge angeordnet ist.

Im Rahmen der Erfindung kann der Schutzbügel ein- oder mehrteilig sein, wobei der Schutzbügel dann eine starre Baueinheit ausbilden kann oder auch relativ zueinander bewegliche Teile, Komponenten und/oder Anbauteile oder Aggregate tragen kann.

Möglich ist, dass der Schutzbügel eine starre Baueinheit bildet, die in einer festen Montageposition und Orientierung an der Säule des Frontladers befestigt ist. Für eine Ausführungsform ist der Schutzbügel allerdings hinsichtlich seiner Konfiguration veränderbar. Hierbei verfügt der Schutzbügel an dem Frontlader eine Konfiguration, die einer Schutzstellung entspricht, sowie über eine Konfiguration, die einer Vorratsstellung entspricht. In der Schutzstellung gewährleistet der Schutzbügel den Schutz der Bedienungsperson auf dem Fahrersitz auch dann, wenn die Schwinge des Frontladers in einer angehobenen Stellung ist. Vorzugsweise gewährleistet die Schutzstellung die mit der eingangs angeführten europäischen Norm geforderten Schutzanforderungen. Hingegen ist die Vorratsstellung eine Betriebsstellung, in der eine Bevorratung des Schutzbügels oder ein Ablegen des Schutzbügels erfolgt, ohne dass die eigentliche Schutzfunktion gewährleistet ist, wobei in der Vorratsstellung keinerlei Schutzfunktion oder eine reduzierte Schutzfunktion bereitgestellt werden kann. Vorzugsweise ist die Vorratsstellung eine Konfiguration des Schutzbügels, bei welcher der Schutzbügel nach vorne abgesenkt oder geschwenkt ist, wobei beispielsweise der Schutzbügel dann auf einem Vorbau oder der Motorhaube des Arbeitsfahrzeugs abgelegt sein kann oder ungefähr horizontal orientiert sein kann. In der Vorratsstellung behindert vorzugsweise der Schutzbügel nicht das Sichtfeld der Bedienungsperson, sodass die Vorratsstellung auch eingenommen werden kann, wenn kein Betrieb eines Arbeitswerkzeuges des Frontladers erfolgt, sondern sich die Arbeitsfahrzeugkombination aus dem Arbeitsfahrzeug und dem Frontlader über das Feld oder über eine Straße bewegt. Möglich ist auch, dass die Vorratsstellung eingenommen wird, um ein Arbeitswerkzeug mit dem Frontlader zu verbinden oder ein Stückgut oder eine Last aufzunehmen, während dann mit einem Anheben der Last oder des Stückguts der Schutzbügel in die Schutzstellung überführt wird.

Für eine weitere Lösung der Aufgabe der Erfindung ist der Schutzbügel an dem Anbauturm des Arbeitsfahrzeugs befestigt. Der Schutzbügel erstreckt sich dann von dem Kopplungsbereich des Anbauturms mit der Säule des Frontladers nach oben und hinten. Bei an dem Arbeitsfahrzeug montierter und angehobener Schwinge schützt der Schutzbügel eine Bedienungsperson des Arbeitsfahrzeugs. Im Gegensatz zu dem vorbekannten, eingangs genannten Prototypen der Unternehmen ALÖ AB und ISEKI-Maschinenbau GmbH ist aber die Konfiguration des Schutzbügels veränderbar zwischen einer Schutzstellung und einer Vorratsstellung, wobei hierzu grundsätzlich das zuvor hinsichtlich des Schutzbügels an dem Frontlader Gesagte entsprechend gilt.

Die folgenden Ausführungen gelten sowohl für die Anbringung des Schutzbügels an der Säule des Frontladers als auch für die Anbringung des Schutzbügels an dem Anbauturm des Arbeitsfahrzeugs:
Für die genutzten Freiheitsgrade zwischen der Schutzstellung und der Vorratsstellung gibt es vielfältige Möglichkeiten. So kann beispielsweise möglich sein, dass der Schutzbügel translatorisch oder entlang einer Kurvenbahn oder teleskopartig ein- und/oder ausgefahren wird zwischen der Schutzstellung und Vorratsstellung. Für einen Vorschlag der Erfindung ist der Schutzbügel verschwenkbar, wobei eine Verschwenkung um ein Schwenklager mit einer Schwenkachse erfolgt. Die Schutzstellung und die Vorratsstellung sind somit unterschiedliche Schwenkstellungen des Schutzbügels. Möglich ist dabei, dass der gesamte Schutzbügel gegenüber dem Frontlader als starres Bauteil oder starre Baugruppe verschwenkt wird. Möglich ist aber auch, dass der Schutzbügel zwei Schutzbügel-Teile aufweist, die relativ zueinander zwischen der Schutzstellung und der Vorratsstellung verschwenkt werden.

Für einen weiteren Vorschlag weist der Schutzbügel einen mechanischen Anschlag auf. Der Anschlag kann dann die Vorratsstellung vorgeben. Alternativ oder kumulativ kann ein mechanischer Anschlag vorgesehen sein, der die Schutzstellung vorgibt.

Es kann alternativ oder zusätzlich ein mechanischer Anschlag vorgesehen sein, an dem eine Komponente, die mit der Hubbewegung des Frontladers bewegt wird (beispielsweise die Schwinge, die Steuerstange oder der Hubzylinder), dann, wenn sich der Schutzbügel in der Vorratsstellung befindet und sich die Komponente von einer abgesenkten Stellung in eine Anschlagstellung bewegt, zur Anlage kommt. Hierbei kann die Anschlagstellung so vorgegeben sein, dass ein Anheben des Stückguts oder der Last in eine Höhe, die der Anschlagstellung entspricht, auch keine Gefahr für die Bedienungsperson mit sich bringt, wenn der Schutzbügel nicht in der Schutzstellung, sondern in der Vorratsstellung ist. Über die Anschlagstellung kann dann verhindert werden, dass ein Anheben des Frontladers in eine Höhe erfolgt, in welcher die Gefahr besteht, dass das Stückgut auf die Bedienungsperson fällt oder rollt.

Um lediglich ein einfaches Beispiel zu nennen, kann die Anschlagstellung einer Hubstellung des Frontladers entsprechen, in der die Schwinge nicht zumindest geringfügig nach vorne geneigt ist, sodass in der Anschlagstellung gewährleistet ist, dass keine Gefahr besteht, dass ein Stückgut wie ein Ballen die Schwinge entlang nach hinten in Richtung der Bedienungsperson rollen kann.

Möglich ist beispielsweise auch, dass eine Schwinge des Frontladers zwischen der abgesenkten Stellung und der Anschlagstellung einen Montagehub ausführt, der erforderlich sein kann, um beispielsweise ein Arbeitswerkzeug an dem Frontlader zu montieren, ohne dass zwingend die Überführung des Schutzbügels in die Schutzstellung erforderlich ist. Vielmehr kann die Überführung des Schutzbügels erst dann erforderlich sein, wenn tatsächlich auch ein Anheben des Frontladers über die Anschlagstellung hinaus erfolgt.

In einer weiteren Ausführungsform des Frontladers ist ein Sensor vorhanden. Der Sensor kann das Vorhandensein eines Schutzbügels an dem Arbeitsfahrzeug oder dem Frontlader erfassen. Alternativ oder kumulativ kann der Sensor eine Konfiguration des Schutzbügels erfassen, wobei vorzugsweise der Sensor erfasst, ob sich der Schutzbügel in der Vorratsstellung oder in der Schutzstellung befindet, wobei auch eine Detektierung von diskreten Zwischenstellungen durch den Sensor oder die Ermittlung kontinuierlicher Zwischenstellungen des Schutzbügels mittels des Sensors möglich ist. Im einfachsten Fall kann der Sensor als Schalter ausgebildet sein, der betätigt wird in Abhängigkeit davon, ob ein Schutzbügel montiert ist oder nicht, oder der in der Vorratsstellung oder der Schutzstellung betätigt ist, während dieser außerhalb der genannten Stellung nicht betätigt ist (oder umgekehrt). Der Sensor kann bspw. auch als Wegsensor oder Drehwinkelsensor ausgebildet sein, der die Stellung des Schutzbügels erfasst.

Das Signal des Sensors kann für vielfältige Zwecke genutzt werden. So kann beispielsweise für die Bedienungsperson an einer Anzeige angezeigt werden, dass ein Schutzbügel vorhanden oder nicht vorhanden ist oder es kann die jeweilige Konfiguration des Schutzbügels angezeigt werden.

Für einen Vorschlag ist eine Steuereinrichtung des Frontladers oder des Arbeitsfahrzeugs eingerichtet, um eine Bewegung der Schwinge in Abhängigkeit von einem Signal des Sensors zu steuern. Hierbei kann die Steuereinrichtung eine Steuereinheit des Frontladers sein und eine geeignete Steuerlogik zur Verarbeitung des Signals des Sensors und zur Erzeugung eines Steuersignals für einen Hubzylinder der Schwinge aufweisen. Möglich ist aber auch, dass das Signal des Sensors von dem Frontlader an eine Steuereinheit des Arbeitsfahrzeugs übertragen wird, die dann der Steuerung des Hubzylinders für die Schwinge des Frontladers dient. Für diese Vorschläge wird in Abhängigkeit von dem Signal des Sensors eine Bewegung der Schwinge gesteuert. So kann beispielsweise dann, wenn kein Schutzbügel vorhanden ist, also kein Schutzbügel mit dem Arbeitsfahrzeug oder dem Frontlader montiert ist, keine Ansteuerung des Frontladers, insbesondere kein Anheben der Schwinge, möglich sein, sodass beispielsweise die hydraulische Beaufschlagung eines Hubzylinders für die Schwinge mittels eines von der Steuereinheit angesteuerten Sperrventils blockiert wird oder eine hydraulische Druckversorgung deaktiviert wird oder Kolbenkammern des Hubzylinders kurzgeschlossen werden. Möglich ist auch, dass in Abhängigkeit des Signals des Sensors eine Begrenzung des Hubs des Frontladers derart erfolgt, dass ein Anheben des Frontladers oder der Schwinge nur bis zu einer vorgegebenen reduzierten maximalen Höhe möglich ist, in der keine Gefahr besteht, dass die Bedienungsperson durch ein Stückgut gefährdet wird.

Für diese Ausgestaltung kann beispielsweise eine Ventileinrichtung und/oder eine Steuereinrichtung an dem Frontlader und/oder dem Arbeitsfahrzeug vorhanden sein, die dazu eingerichtet sind/ist, bei nicht vorhandenem Schutzbügel oder dann, wenn der Schutzbügel nicht in der Schutzstellung ist, einen Arbeitsdruck eines Hydraulikzylinders, mit dem die Schwinge angehoben wird, zu begrenzen. Auf diese Weise kann eine Begrenzung der Hubkraft für das Stückgut erfolgen. Auf diese Weise kann bspw. das Heben der Last ohne wirksamen Schutzbügel nur erfolgen, wenn das Stückgut eine so kleine Gewichtskraft hat, dass keine Gefahr für die Bedienungsperson besteht.

Grundsätzlich möglich ist, dass der Schutzbügel frei auskragend an der Säule oder dem Anbauturm gehalten ist oder an einer beliebigen Stelle des Frontladers oder Arbeitsfahrzeugs abgestützt oder befestigt ist. Für einen Vorschlag weist der Schutzbügel einen Abstütz- oder Arretierabschnitt auf. Über den Abstütz- oder Arretierabschnitt kann der Schutzbügel an einem Überrollbügel des Arbeitsfahrzeugs abgestützt oder arretiert werden. Die Anlage des Abstütz- oder Arretierabschnitts an dem Überrollbügel gibt dann die Schutzstellung vor. Um lediglich einige die Erfindung nicht beschränkende Beispiele zu nennen, kann die Abstützung des Schutzbügels über einen vorzugsweise im hinteren Endbereich des Schutzbügels angeordneten Abstützabschnitt erfolgen, der mit dem Schwenken des Schutzbügels in die Schutzstellung von oben zur Anlage an den Überrollbügel kommt. Möglich ist, dass der Abstützabschnitt dann mit einer elastomeren Beschichtung, einer Schutzeinrichtung oder einer beliebigen Federeinrichtung ausgestattet ist, die ein Anschlagen des Schutzbügels an dem Überrollbügel möglich macht, den Stoß beim Anschlagen reduziert oder den Abstützabschnitt des Schutzbügels gegenüber einem Verschleiß oder Beschädigungen schützt. Möglich ist aber auch, dass der Schutzbügel mit einem Arretierabschnitt an dem Überrollbügel arretiert ist.

In dem vorliegenden Anmeldungstext bezeichnet ein "Arretieren" insbesondere ein beliebiges lösbares Halten oder Befestigen. Das Arretieren umfasst dabei auch ein Verbinden mittels einer Rast- oder Verriegelungseinrichtung.

Der Schutzbügel kann eine beliebige Form aufweisen und beispielsweise als Rahmenkonstruktion ausgebildet sein. Vorzugsweise ist der Schutzbügel U-förmig ausgebildet, wobei die Seitenschenkel des U parallel oder abgewinkelt sein können und der Grundschenkel des U zur Abstützung auf dem Überrollbügel bestimmt sein kann. Hingegen können die freien Endbereiche der Seitenschenkel des U für die Verbindung mit den beiden lateral voneinander beabstandeten Säulen eines Frontladers bestimmt sein, wobei diese Verbindung über ein Schwenklager erfolgen kann oder eine starre Verbindung sein kann.

Für einen Vorschlag der Erfindung weist der Schutzbügel Streben auf, bei denen es sich um die Seitenschenkel des U handeln kann. Zwischen diesen Streben kann sich dann ein Querschutz erstrecken. Der Querschutz soll dafür sorgen, dass ein Stückgut nicht zwischen den beiden Streben hindurchtreten und die Bedienungsperson verletzten kann. Möglich ist auch, dass sich zwischen den Streben ein Flächenschutz erstreckt, mit dem zumindest eine Teilfläche zwischen den Streben abgedeckt werden kann. Der Flächenschutz kann beispielsweise als Gitter, Netz, Plexiglas u. ä. ausgebildet sein, wobei vorzugsweise zumindest ein Teilbereich oder Sichtfenster des Flächenschutzes durchsichtig ist, sodass die Bedienungsperson noch freie oder eingeschränkte Sicht durch den Flächenschutz hindurch in Richtung des Frontladers und des Arbeitswerkzeuges hat.

Der Schutzbügel kann grundsätzlich auf beliebige Weise an der Säule gehalten werden, beispielsweise über Stege oder Platten der Säule oder des Anbauturms umgreifende Klammern oder Befestigungsschrauben, mittels welchen der Schutzbügel mit Platten der Säule oder dem Anbauturm verschraubt sein kann. Für eine besondere Ausführungsform ist der Schutzbügel über mindestens einen Befestigungs- oder Schwenklagerbolzen an der Säule gehalten oder gelagert, der zusätzlich zu dieser Funktion auch einem Befestigen oder einer schwenkbaren Lagerung einer Komponente des Frontladers oder der Kopplung des Anbauturms des Arbeitsfahrzeugs mit der Säule des Frontladers dient. Beispielsweise kann der Schutzbügel über einen Schwenklagerbolzen der Schwinge und/oder des Hydraulikzylinders und/oder der Steuerstange des Frontladers an der Säule gehalten oder sogar auch verschwenkbar gelagert sein, womit der Schwenklagerbolzen multifunktional ist und Bauraum und Bauaufwand eingespart werden kann. Alternativ oder zusätzlich kann ein Anschlag, der die Schutzstellung und/oder die Vorratsstellung vorgibt, durch einen Befestigungs- oder Schwenklagerbolzen bereitgestellt werden, der einem Befestigen oder einer schwenkbaren Lagerung einer Komponente des Frontladers oder der Kopplung des Anbauturms mit der Säule dient. Auch hierfür kann beispielsweise ein Schwenklagerbolzen der Schwinge, des Hydraulikzylinders oder der Steuerstange eingesetzt werden. Möglich ist sogar, dass für die Befestigung und Lagerung des Schutzbügels ausschließlich zu anderen Zwecken genutzte Befestigungs- und/oder Schwenklagerbolzen verwendet werden und/oder auch für die Bereitstellung eines Anschlags ausschließlich derartige multifunktionale Befestigungs- oder Schwenklagerbolzen verwendet werden.

Möglich ist im Rahmen der Erfindung, dass der Schutzbügel in der Vorratsstellung lediglich durch ein Aufliegen auf einem Anschlag infolge seines Eigengewichtes gesichert ist. Das Entsprechende kann auch für die Sicherung des Schutzbügels in der Schutzstellung gelten. Für einen Vorschlag sind/ist die Schutzstellung und/oder die Vorratsstellung des Schutzbügels mittels einer Arretiereinrichtung gesichert, bei der es sich um eine lösbare haltende Verbindung handelt ohne einen verbleibenden Freiheitsgrad des Schutzbügels. Beispielsweise kann mittels der Arretiereinrichtung der Schutzbügel in der Schutzstellung und/oder in der Vorratsstellung verrastet oder verriegelt sein.

Möglich ist, dass die Bewegung des Schutzbügels von der Schutzstellung in die Vorratsstellung und/oder von der Vorratsstellung in die Schutzstellung manuell herbeigeführt wird. Ebenfalls möglich ist, dass für diese Bewegung ein separater Aktuator vorhanden ist, wobei hierzu beispielsweise auch ein hydraulischer Zylinder Einsatz finden kann, der angeschlossen ist an das Hydrauliksystem des Arbeitsfahrzeugs und/oder des Frontladers. Für einen Vorschlag der Erfindung ist der Schutzbügel über ein Gestänge, eine Gelenkverbindung, eine Mehrgelenkkette, ein Koppelgetriebe oder eine beliebige mechanische andere Antriebsverbindung mechanisch (direkt oder indirekt) mit der Schwinge des Frontladers gekoppelt oder koppelbar. Hierbei ist die mechanische Kopplung derart ausgebildet, dass eine Hubbewegung der Schwinge, die mittels des Hubzylinders der Schwinge herbeigeführt wird, mit einer Bewegung des Schutzbügels in die Schutzstellung gekoppelt ist. Auf diese Weise kann mit dem Anheben der Schwinge automatisch der Schutzbügel in die Schutzstellung bewegt werden, womit eine Erhöhung der Betriebssicherheit einhergeht, da nicht "vergessen" werden kann, den Schutzbügel in die Schutzstellung zu überführen. Andererseits kann ohne derartige Hubbewegung der Schutzbügel in der Vorratsstellung verbleiben, wo der Schutzbügel nicht die Sicht der Bedienungsperson einschränkt und nicht die Dimensionen der Arbeitsfahrzeugkombination vergrößert. Entsprechend kann mittels der mechanischen Kopplung zwischen der Schwinge und dem Schutzbügel auch mit einer Absenkbewegung der Schwinge eine Bewegung des Schutzbügels in die Vorratsstellung herbeigeführt werden.

Wenn der Schutzbügel nicht als starre Baueinheit oder sogar einstückig ausgebildet ist, kann der Schutzbügel über zwei Teile verfügen, nämlich ein Schutzbügel-Befestigungsteil und ein Schutzbügel-Schwenklagerteil. Das Schutzbügel-Befestigungsteil dient dabei der Befestigung des Schutzbügels an der Säule oder dem Anbauturm. Das Schutzbügel-Befestigungsteil kann beispielsweise an einer Seitenplatte der Säule befestigt sein, insbesondere über mindestens Schwenklagerbolzen der Säule für die verschwenkbare Lagerung der Steuerstange, der Schwinge und/oder des Hubzylinders. Hingegen ist das Schutzbügel-Schwenkteil bestimmt, um zwischen der Schutzstellung und der Vorratsstellung verschwenkt zu werden und die eigentliche Schutzfunktion auszuüben, indem an diesem eine herabfallende Last oder ein herunterrollendes Stückgut abgestützt und zurückgehalten wird. Für diesen Vorschlag sind das Schutzbügel-Befestigungsteil und das Schutzbügel-Schwenkteil über ein Schutzbügel-Schwenklager verschwenkbar miteinander verbunden. Vorzugsweise dient als Schwenklagerbolzen des Schutzbügel-Schwenklagers der Schwenklagerbolzen der Säule für die verschwenkbare Lagerung der Steuerstange, der Schwinge oder des Hubzylinders.

Für diesen Vorschlag kann das Schutzbügel-Befestigungsteil auch einen Anschlag aufweisen. An dem Anschlag kann dann ein Anschlag des Schutzbügel-Schwenkteils zur Anlage kommen, womit eine Vorgabe der Vorratsstellung und/oder der Schutzstellung erfolgt. Der Anschlag kann beispielsweise ein fest mit einem Grundkörper des Schutzbügel-Befestigungsteils verbundener Vorsprung sein, während der Anschlag des Schutzbügel-Schwenkteils ein außenliegender Fortsatz, ein Nocken oder ein Haken des Schutzbügel-Schwenkteils sein kann.

Alternativ oder kumulativ möglich ist, dass das Schutzbügel-Befestigungsteil ein Paar von Befestigungsbohrungen aufweist, über die das Schutzbügel-Befestigungsteil mit Befestigungsschrauben an der Säule (hier insbesondere einem Seitenblech der Säule) oder an dem Anbauturm befestigt ist. Somit korreliert der Ort des Paares der Befestigungsbohrungen mit dem Ort der Bohrungen in der Säule oder dem Anbauturm für die Aufnahme der Befestigungsschrauben. Möglich ist auch, dass mindestens eine Befestigungsbohrung einen Schwenklagerbolzen der Säule für die verschwenkbare Lagerung der Steuerstange, der Schwinge oder des Hubzylinders aufnehmen, der damit auch der Befestigung des Schutzbügel-Befestigungsteils an der Säule dient.

Für einen besonderen Vorschlag der Erfindung sind an dem Schutzbügel-Befestigungsteil mehrere Paare von Befestigungsbohrungen vorhanden, wobei in zwei Paaren von Befestigungsbohrungen auch eine übereinstimmende Befestigungsbohrung vorhanden sein kann. Die unterschiedlichen Paare der Befestigungsbohrungen können dann dazu dienen, denselben Schutzbügel mit unterschiedlichen Frontladern oder unterschiedlichen Säulen oder unterschiedlichen Arbeitsfahrzeugen oder Anbautürmen zu verbinden, womit dann der Ort eines Paares von Befestigungsbohrungen jeweils mit dem Ort entsprechender Befestigungsbohrungen der unterschiedlichen Säulen oder Anbautürme korrelieren.

Eine weitere Lösung der der Erfindung zugrunde liegenden Aufgabe stellt eine Arbeitsfahrzeugkombination dar. Eine derartige Arbeitsfahrzeugkombination weist ein Arbeitsfahrzeug auf, an dem ein Frontlader befestigt ist. In diesem Fall werden die zuvor genannten Schnittstellen, Kontaktstellen, Befestigungen, Lagerungen und Komponenten des Arbeitsfahrzeuges und des Frontladers so genutzt, wie dies zuvor beschrieben worden ist. Vorzugsweise handelt es sich bei dem Arbeitsfahrzeug der Arbeitsfahrzeugkombination um ein Arbeitsfahrzeug mit einem Überrollbügel, aber ohne Fahrerkabine.

Eine weitere Lösung der der Erfindung zugrunde liegenden Aufgabe stellt eine Gruppe von Arbeitsfahrzeugkombinationen dar. Hierbei verfügt die Gruppe über zwei Teilgruppen: Eine erste Teilgruppe weist insbesondere baugleiche Arbeitsfahrzeugkombinationen auf, wie diese zuvor beschrieben worden sind und bei denen somit ein Schutzbügel vorhanden ist. Hingegen verfügt die zweite Teilgruppe über insbesondere baugleiche Arbeitsfahrzeugkombinationen, die ein Arbeitsfahrzeug und einen Frontlader mit einer Säule mit einem Kopplungsbereich für die Kopplung des Frontladers an einem Anbauturms des Arbeitsfahrzeugs und eine verschwenkbar an der Säule gehaltenen Schwinge aufweisen. Die Arbeitsfahrzeugkombinationen der zweiten Teilgruppe verfügen aber dann über keinen Schutzbügel. Erfindungsgemäß sind in den Arbeitsfahrzeugkombinationen der ersten und zweiten Teilgruppen die Säulen baugleich ausgebildet. Um zu ermöglichen, dass an den Säulen der Arbeitsfahrzeugkombination der ersten Teilgruppe die Schutzbügel angebracht werden, während dies für die Arbeitsfahrzeugkombinationen der zweiten Teilgruppe nicht der Fall ist, erstrecken sich bei den beiden Teilgruppen unterschiedlich lange Befestigungsbolzen und/oder Schwenklagerbolzen durch die Säulen der Arbeitsfahrzeugkombinationen. Finden gesonderte Befestigungsbolzen für die Befestigung des Schutzbügels an der Säule Einsatz, können die Befestigungsbolzen entsprechend unterschiedlich dimensioniert werden. Finden Schwenklagerbolzen der Säule Einsatz, die der schwenkbaren Lagerung der Schwinge, der Steuerstange oder des Hubzylinders dienen, können für den Fall der zweiten Fallgruppe dann Schwenklagerbolzen verwendet werden, die eine geringere Länge aufweisen, wobei der Unterschied der Längen ungefähr der Dicke des Schutzbügels im Befestigungsbereich an der Säule entspricht.

Eine weitere Lösung der der Erfindung zugrunde liegenden Aufgabe stellt ein Schutzbügel dar, mit dem ein herkömmlicher Frontlader oder ein herkömmliches Arbeitsfahrzeug, welches nicht mit einem Schutzbügel ausgestattet ist, zu einem Frontlader oder Arbeitsfahrzeug umgebaut werden kann, wie dies hier beschrieben worden ist. In diesem Fall verfügt der Schutzbügel über ein Schutzbügel-Befestigungsteil, über welches der Schutzbügel an einer Säule des Frontladers oder an dem Anbauturm des Arbeitsfahrzeugs befestigbar ist. Des Weiteren verfügt der Schutzbügel über ein Schutzbügel-Schwenkteil. Das Schutzbügel-Befestigungsteil und das Schutzbügel-Schwenkteil sind dann über ein Schutzbügel-Schwenklager verschwenkbar miteinander verbunden.

Wie dies zuvor bereits erläutert worden ist, kann dann das Schutzbügel-Befestigungsteil einen Anschlag aufweisen, an dem für die Vorgabe der Vorratsstellung und/oder die Vorgabe der Schutzstellung ein Anschlag des Schutzbügel-Schwenkteils zur Anlage kommt. Alternativ oder kumulativ möglich ist, dass mindestens ein Paar von Befestigungsbohrungen vorhanden ist, über die das Schutzbügel-Befestigungsteil mit Befestigungs- oder Schwenklagerbolzen an der Säule oder dem Anbauturm befestigt ist, wobei vorzugsweise mindestens zwei Paare derartiger Befestigungsbohrungen für unterschiedliche Typen von Säulen und/oder Anbautürmen vorhanden sind.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.** 1: zeigt schematisch eine Arbeitsfahrzeugkombination mit einem Arbeitsfahrzeug und einem daran montierten Frontlader in einer Seitenansicht.
- **Fig. 2**: zeigt ein Detail II der Arbeitsfahrzeugkombination gemäß Fig. 1, wobei eine Säulenplatte der Säule des Frontladers teilweise weggeschnitten ist.
- **Fig. 3**: zeigt den Frontlader der Arbeitsfahrzeugkombination gemäß Fig. 1 und 2 mit einem Schutzbügel und mit einem Anbauturm, einer Abstützstrebe sowie einem Überrollbügel des Arbeitsfahrzeuges.
- **Fig.** 4: zeigt in einer räumlichen Darstellung einen Frontlader mit einem daran gehaltenen Arbeitswerkzeug, wobei ein Schutzbügel starr in einer Schutzstellung montiert ist.
- **Fig.** 5: zeigt in einer räumlichen Darstellung eine weitere Ausführungsform eines Frontladers mit einem daran gehaltenen Arbeitswerkzeug, wobei sich ein hier verschwenkbarer Schutzbügel in einer Schutzstellung befindet.
- **Fig. 6**: zeigt den Frontlader gemäß Fig. 5 in einer räumlichen Darstellung, wobei sich der Schutzbügel in einer Vorratsstellung befindet.
- **Fig. 7**: zeigt in einer räumlichen Darstellung ein Detail des Frontladers gemäß Fig. 5 und 6 im Verbindungsbereich des Schutzbügels mit einer Säule.
- **Fig. 8**: zeigt in einer räumlichen Explosionsdarstellung den Verbindungsbereich von Seitenschenkeln eines Schutzbügels mit den lateral beabstandeten Säulen des Frontladers.
- **Fig. 9**: zeigt stark schematisiert eine Überwachungs-, Steuer- oder Regeleinrichtung mit einem Sensor, die über eine Ventileinrichtung einen Hubzylinder einer Schwinge ansteuert.

### FIGURENBESCHREIBUNG

In der folgenden Figurenbeschreibung wird teilweise für Bauelemente oder Merkmale, die sich hinsichtlich der Gestaltung und/oder Funktion entsprechen oder ähneln, dieselbe Bezugszahl verwendet, wobei dann diese Bauelemente oder Merkmale durch einen zusätzlichen Buchstaben a, b voneinander unterschieden sein können. Auf diese Bauelemente oder Komponenten kann dann auch mit der Bezugszahl ohne Verwendung des zusätzlichen Buchstabens Bezug genommen sein, womit dann eines oder eine beliebige Anzahl dieser Bauelemente oder Merkmale gemeint sein können. Vorzugsweise sind für den Frontlader und den Schutzbügel die Bauelemente und die Komponenten der beiden lateralen Seiten mit denselben Bezugszahlen gekennzeichnet, aber durch die unterschiedlichen Buchstaben a, b voneinander unterschieden.

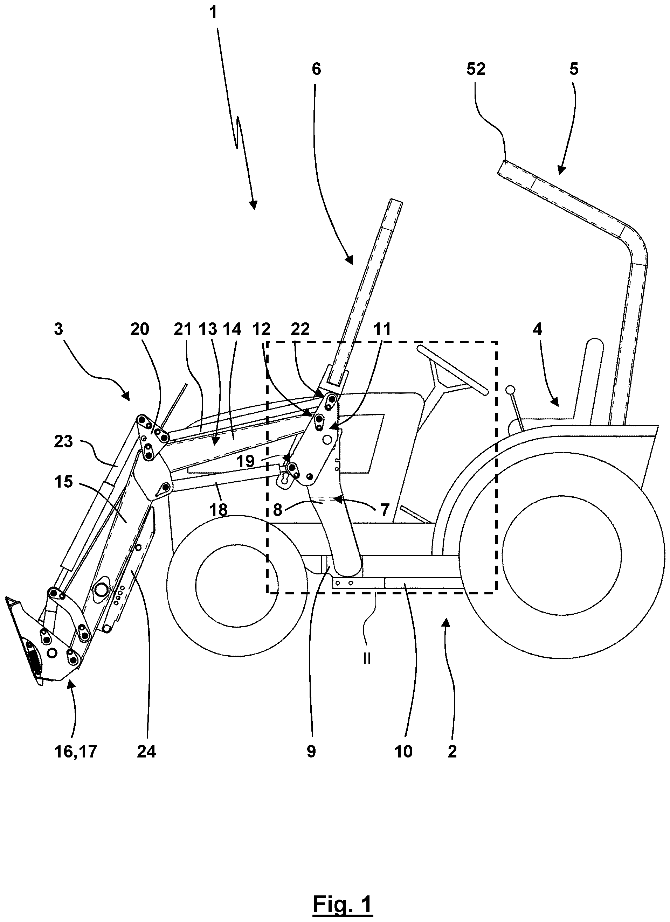

**Fig. 1** zeigt eine Arbeitsfahrzeugkombination 1 mit einem Arbeitsfahrzeug 2, an dem ein Frontlader 3 lösbar montiert ist.

Das Arbeitsfahrzeug 2 verfügt über einen Fahrersitz 4 für eine Bedienungsperson, von dem aus die Bedienungsperson den Frontlader 3 bedienen kann. Das Arbeitsfahrzeug 2 ist ohne Fahrerkabine ausgebildet. Das Arbeitsfahrzeug 2 weist einen Überrollbügel 5 auf. Der Überrollbügel 5 ist hinter dem Fahrersitz 4 an dem Chassis des Arbeitsfahrzeugs 2 gehalten und erstreckt sich zunächst (unter leichter Neigung nach hinten) nach oben und ist dann schräg nach vorne und oben abgewinkelt. Der Überrollbügel 5 kann bei einer Projektion in eine Ebene U-förmig ausgebildet sein, wobei dann die freien Endbereiche der Seitenschenkel des U an dem Chassis des Arbeitsfahrzeugs 2 befestigt sein können, während an dem Grundschenkel des U in im Folgenden näher spezifizierter Weise ein Schutzbügel 6 des Frontlader 3 abgestützt, befestigt oder arretiert sein kann.

Das Arbeitsfahrzeug 2 verfügt über einen Anbauturm 7, der vorzugsweise ein vertikales Anbauturmteil 8 sowie ein horizontales Anbauturmteil 9 aufweist, die einstückig miteinander ausgebildet sein können, miteinander verschweißt oder miteinander verschraubt sein können.

Möglich ist, dass der Anbauturm 7 L-förmig ausgebildet ist, wobei dann die Anbauturmteile 8, 9 jeweils einen Schenkel des L bilden. Ebenfalls möglich ist, dass der Anbauturm 7 in grober Näherung einem auf dem Kopf stehenden T entspricht, wobei dann ein Anbauturmteil 8 den Vertikalschenkel des T bildet, während der andere Anbauturmteil 9 den Horizontalschenkel des T bildet. An dem Anbauturmteil 9 ist für das hier dargestellte Ausführungsbeispiel eine Abstützstrebe 10 befestigt, die wiederrum an einem in Längsrichtung des Arbeitsfahrzeugs 2 beabstandeten Ort an dem Chassis oder dem Fahrwerk befestigt ist. Das vertikale Anbauturmteil 8 weist in dem oberen Endbereich einen Kopplungsbereich 59 für eine lösbare starre Ankopplung einer Säule 11 des Frontladers 3 auf.

Der Frontlader 3 verfügt über eine Säule 11 (die in der eingangs genannten europäischen Norm auch als Befestigungseinrichtung bezeichnet ist und in der Fachwelt teilweise auch als Koppelturm bezeichnet ist), die einen Kopplungsbereich 58 aufweist, im Bereich dessen die Säule 11 an dem Kopplungsbereich 59 des Anbauturms 7 lösbar gehalten ist.

An der Säule 11 ist über ein Schwenklager 12 eine Schwinge 13 verschwenkbar um eine vertikal zur Zeichenebene gemäß Fig. 1 orientierte Schwenkachse 57 gelagert.

Für das dargestellte Ausführungsbeispiel ist die Schwinge 13 abgewinkelt mit Schwingenteilen 14, 15, wobei der freie Endbereich des Schwingenteils 15 verschwenkbar mit einer Halterung 67 für ein Arbeitswerkzeug 16, hier eine Schaufel 17, verbunden ist.

Über einen Hubzylinder 18 kann die Schwinge 13 angehoben und abgesenkt werden. Der Hubzylinder 18 ist in einem Endbereich in einem Schwenklager 19 an der Säule 11 angelenkt.

Der andere Endbereich des Hubzylinders 18 ist beabstandet von dem Schwenklager 12 an der Schwinge 13 angelenkt, was für das dargestellte Ausführungsbeispiel im Bereich der Abwinklung zwischen den Schwingenteilen 14, 15 erfolgt. Im Bereich der Abwinklung zwischen den Schwingenteilen 14, 15 ist ein Umlenkelement 20 über ein Schwenklager an der Schwinge 13 gelagert.

Eine Steuerstange 21 ist in einem Endbereich in einem Schwenklager 22 an der Säule 11 angelenkt. Der andere Endbereich der Steuerstange 21 ist mittels eines Schwenklagers an dem Umlenkelement 20 angelenkt. Die Steuerstange 21 gewährleistet, dass während einer Hub- und Senkbewegung der Schwinge 13 eine angepasste Verschwenkung des Umlenkelements 20 erfolgt.

An dem Umlenkelement 20 ist des Weiteren ein Endbereich eines Arbeitswerkzeugzylinders 23 mittels eines Schwenklagers angelenkt. Der andere Endbereich des Arbeitswerkzeugzylinders 23 ist über einen Gelenktrieb mit der Halterung 67 für das Arbeitswerkzeug 16 verbunden. Durch Betrieb des Arbeitswerkzeugzylinders 23 kann eine Steuerung des Neigungswinkels der Halterung 67 des Arbeitswerkzeugs 13 gegenüber der Schwinge 13 gesteuert werden.

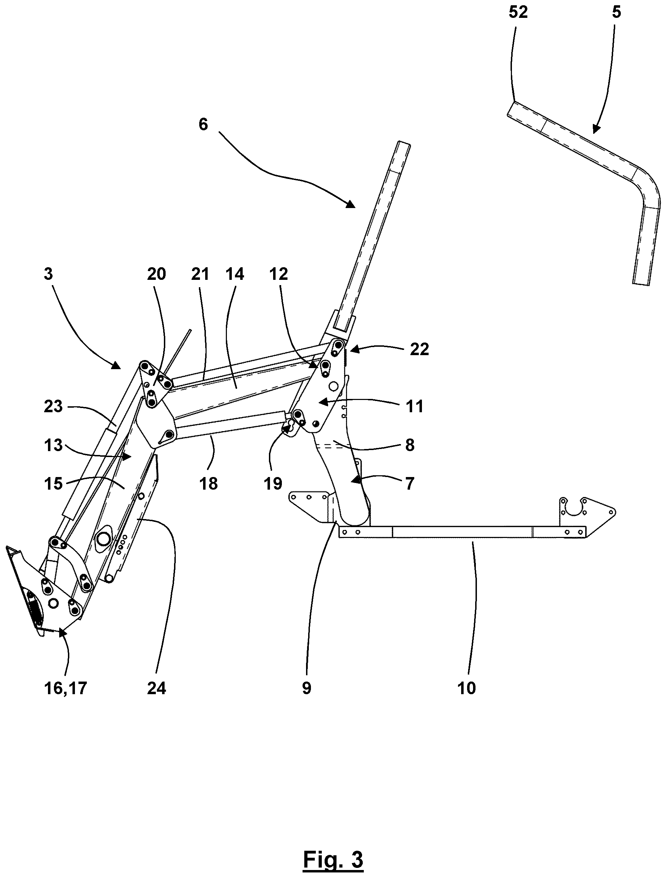

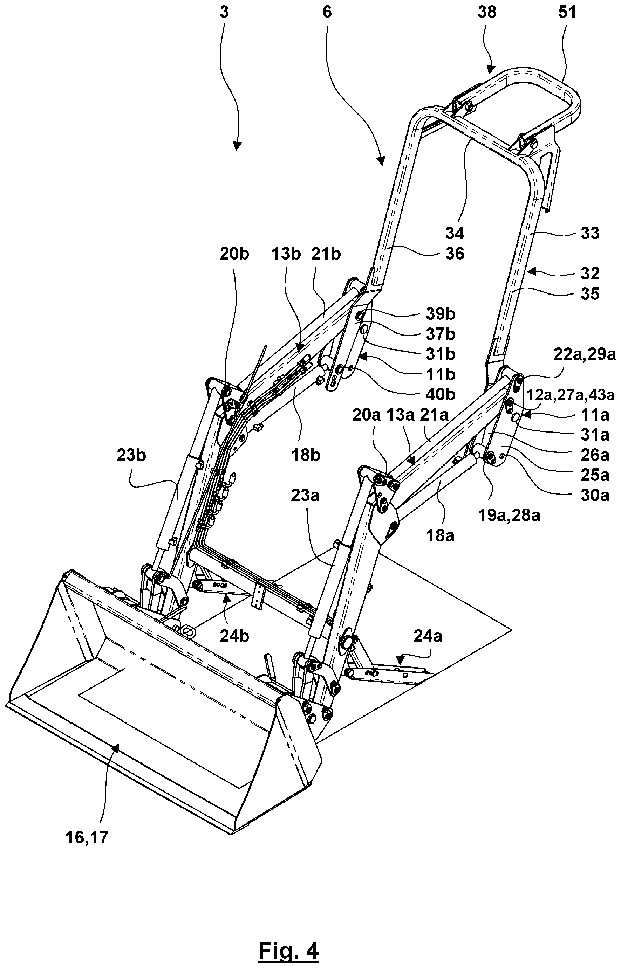

An der Schwinge 13, hier dem Schwingenteil 15, ist ein Abstellmechanismus 24 gehalten. Der Abstellmechanismus 24 ist in einer nicht aktiven Stellung gemäß Fig. 1 und 3 an die Schwinge 13 herangeklappt. Aus dieser nicht aktiven Stellung kann der Abstellmechanismus 24 in eine aktive Stellung ausgeklappt werden (vgl. **Fig. 4**), in der der Frontlader 3 mit dem daran befestigten Arbeitswerkzeug 16 auf dem Boden abgestellt werden kann, wobei in derart abgestelltem Zustand des Frontladers 3 vorzugsweise die Säule 11 geeignet für eine Kopplung mit dem Arbeitsfahrzeug 2 angeordnet ist, indem beispielsweise das Arbeitsfahrzeug 3 mit dem Anbauturm 7 in die Säule 11 eingefahren werden kann.

In Fig. 4 ist des Weiteren zu erkennen, dass der Frontlader 3 jeweils über Paare von Säulen 11a, 11b, Schwingen 13a, 13b, Hubzylinder 18a, 18b, Umlenkelemente 20a, 20b, Steuerstangen 21a, 21b und Arbeitswerkzeugzylinder 23a, 23b sowie Abstellmechanismen 24a, 24b verfügt, die bei paralleler Orientierung zueinander lateral von einander beabstandet sind.

Die Säule 11 verfügt über zwei parallele Säulenplatten 25, 26, die voneinander derart lateral beabstandet sind, dass zwischen den Säulenplatten 25, 26 das Lagerauge der Steuerstange 21 zur Bildung des Schwenklagers 22, das Lagerauge der Schwinge 13 zur Bildung des Schwenklagers 12 und das Lagerauge des Hubzylinders 18 zur Bildung des Schwenklagers 19 (vorzugsweise ohne Spiel in lateraler Richtung) aufgenommen werden können. Des Weiteren kann in den Zwischenraum zwischen den Säulenplatten 25, 26 der Kopplungsbereich 59 des Anbauturms 7 eintreten. Ein Schwenklagerbolzen 27 des Schwenklagers 12, ein Schwenklagerbolzen 28 des Schwenklagers 19 und ein Schwenklagerbolzen 29 des Schwenklagers 22 erstrecken sich durch eine geeignete Aufnahmebohrung der Säulenplatten 25, 26 und das jeweilige Lagerauge, womit die Schwenklager 12, 19, 22 gebildet sind.

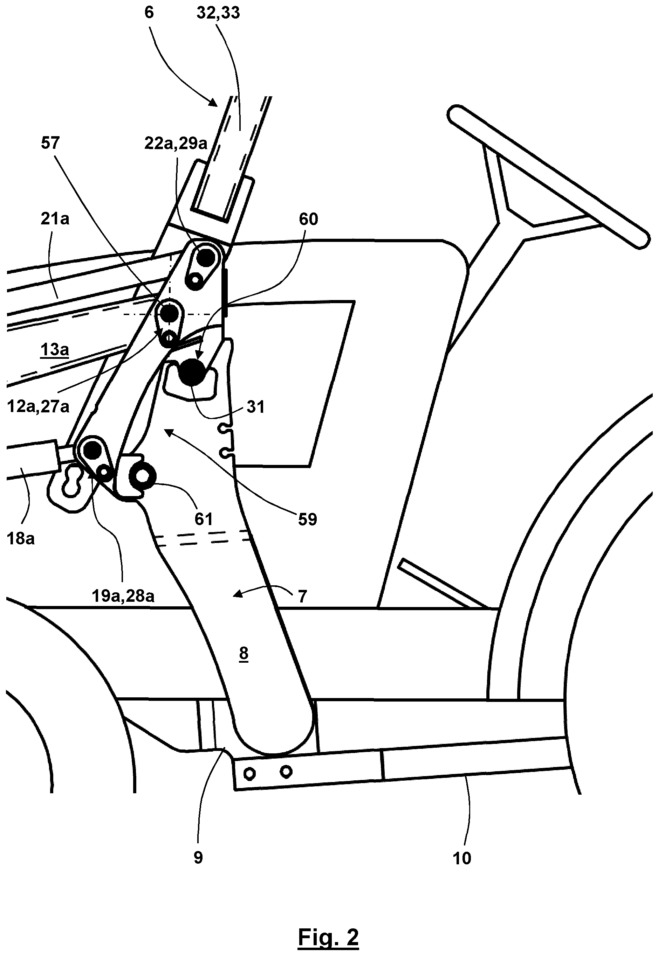

Die Säulenplatten 25, 26 der Säule 11 verfügen des Weiteren über fluchtende Koppelbolzenbohrungen 30. In den Koppelbohrungen 30 ist bei an dem Anbauturm 7 montierter Säule 11 ein Koppelbolzen 61 angeordnet, der sich auch durch entsprechende Koppelbohrungen des Anbauturms 7 erstreckt (vgl. Fig. 2). Beabstandet von den Koppelbohrungen 30 verfügt die Säule 11 über einen fest mit den Säulenplatten verbundenen Koppelbolzen 31, der von oben in eine Aufnahme 60 des Anbauturms 7, die einen randoffenen Querschnitt aufweist, eingelegt werden kann. Ist ein Koppelbolzen 61 in der Koppelbolzenbohrung 30 der Säule 11 und Koppelbohrungen des Anbauturms 7 angeordnet und der Koppelbolzen 31 in der Aufnahme 60 des Anbauturms angeordnet, ist die Säule 11 an dem Anbauturm 7 fixiert.

In Fig. 2 und 4 sind die Komponenten der Säulen 11 vorrangig für die Säule 11a gekennzeichnet, wobei das Entsprechende auch für die andere Säule 11b gilt.

In Fig. 4 ist des Weiteren die Geometrie des Schutzbügels 6 zu erkennen, der in Fig. 4 fest in der Schutzstellung montiert ist. Der Schutzbügel 6 verfügt über ein Rahmenteil 33. Das Rahmenteil 33 besteht aus einem Strangprofil oder Rohr, welches eine U-Form aufweist. Die U-Form verfügt über einen Grundschenkel 34 sowie zwei parallele Seitenschenkel 35, 36. Gemäß Fig. 4 ist das U auf dem Kopf stehend an der Säule 11 montiert, sodass sich die Seitenschenkel 35, 36 parallel zueinander von dem Grundschenkel 34 nach unten erstrecken. An das Rahmenteil 32, hier die freien Endbereiche der Seitenschenkel 35, 36, schließen mit dem Rahmenteil 33 verschweißte Lagerplatten 37a, 37b an.

Optional möglich ist, dass verschwenkbar an dem Rahmenteil 33 ein Dachrahmen 38 gelagert ist, welcher eine Art Dach für die Bedienungsperson auf dem Fahrersitz 4 bildet und einen Zwischenraum zwischen dem Schutzbügel 6 und dem Überrollbügel 5 zumindest teilweise schließen kann. In der ungefähr horizontalen Schutzstellung des Dachrahmens 38 liegt der Dachrahmen 38 abseits der Schwenkachse seines Schwenklagers auf einem von dem Rahmenteil 33 ausgebildeten oder abgestützten Anschlag auf. Aus der Schutzstellung kann der Dachrahmen 38 verschwenkt werden, beispielsweise in eine Ausrichtung, in welcher das Rahmenteil 33 und der Dachrahmen 38 ungefähr in einer Ebene angeordnet sind.

Gemäß Fig. 4 ist der Schutzbügel 6 im Bereich der Lagerplatten 37 dadurch an der lateral innenliegenden Säulenplatte 26 gehalten, dass sich die Schwenklagerbolzen 27, 28 durch geeignete Aufnahmebohrungen der Lagerplatten 37 hindurch erstrecken. An dem auskragenden Endbereich verfügen die Schwenklagerbolzen 27, 28 über eine axial feste Verbindung mit einem Sicherungselement 39, 40. Das Sicherungselement 39, 40 kann beispielsweise als in einer Nut des Schwenklagerbolzens 27, 28 angeordneter Sicherungsring, beispielsweise mit einer darin abgestützten Sicherungsscheibe, ausgebildet sein. Die Lagerplatten 37 sind zwischen den Sicherungselementen 39, 40 und der Säulenplatte 26 axial gefangen. Die Schwenklagerbolzen 27, 28 sind für die Befestigung der Lagerplatten 37 vorzugsweise um die Plattendicke der Lagerplatten 37 länger ausgebildet als entsprechende Schwenklagerbolzen 27, 28, die verwendet werden, wenn kein Schutzbügel 6 an den Säulen 11 montiert werden soll.

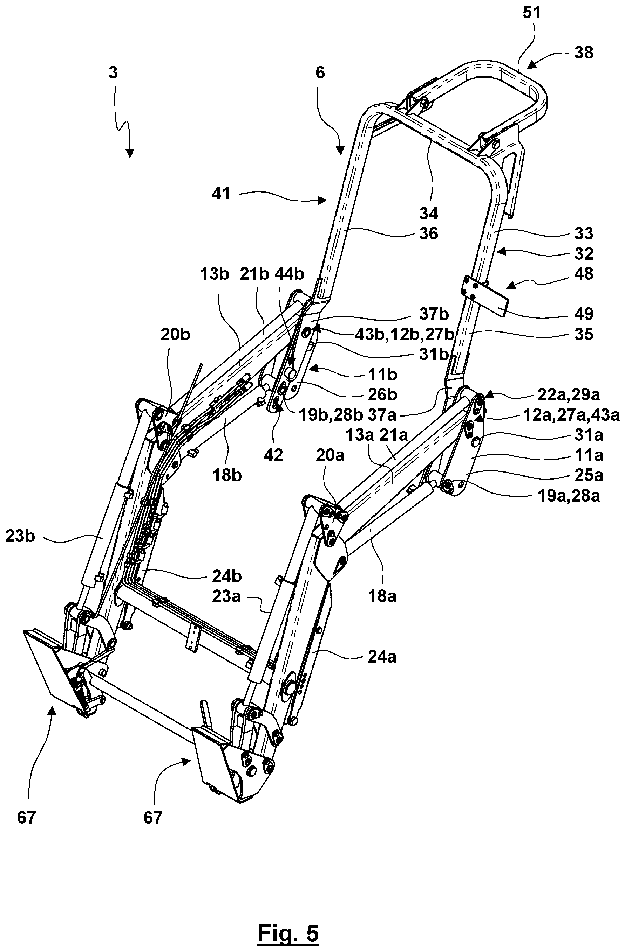

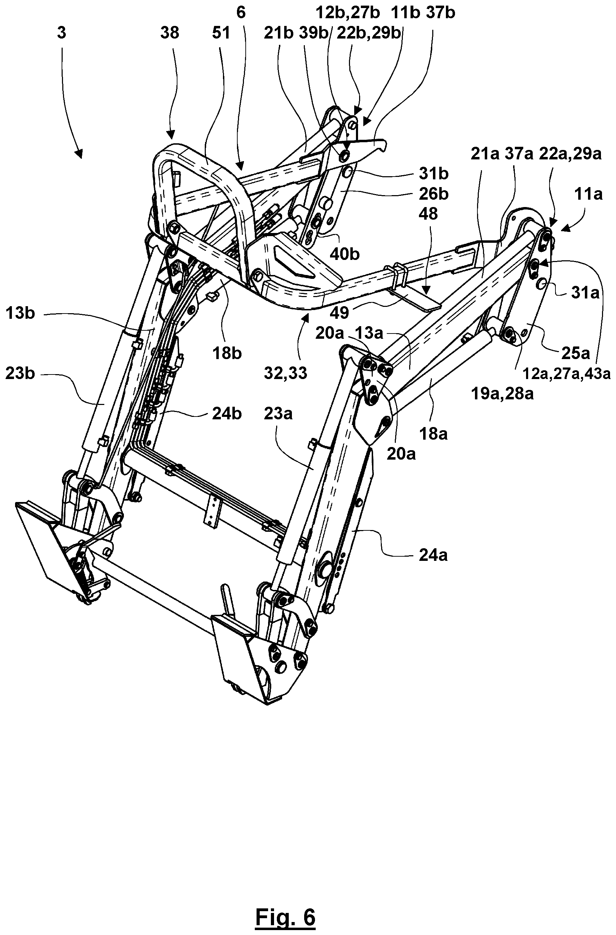

Während in Fig. 4 über die erläuterte Verbindung der Lagerplatten 37 über die Schwenklagerbolzen 27, 28 mit der Säule 11 der Schutzbügel 11 starr an der Säule befestigt ist, ist in den **Fig.** 5 bis 7 eine abgewandelte Ausführungsform dargestellt, bei der der Schutzbügel 6 verschwenkbar ist zwischen einer Schutzstellung gemäß Fig. 5 und einer Vorratsstellung gemäß Fig. 6. Der Schutzbügel 6 weist ein Schutzbügel-Schwenkteil 41 und ein Schutzbügel-Befestigungsteil 42 auf, die über ein Schutzbügel-Schwenklager 43 verschwenkbar miteinander verbunden sind. Das Rahmenteil 33 bildet mit dem Grundschenkel 34 und den Seitenschenkeln 35, 36 und den Lagerplatten 37 das Schutzbügel-Schwenkteil 41. Das Schutzbügel-Befestigungsteil 42 ist dabei an der Säule 11 so befestigt, wie dies für das Ausführungsbeispiel gemäß Fig. 4 für die Lagerplatten 37 erfolgt ist. Somit erstrecken sich die Schwenklagerbolzen 27, 28 durch Befestigungsbohrungen des Schutzbügel-Befestigungsteils 42 mit einer Sicherung durch entsprechende Sicherungselemente 39, 40. Allerdings ist für dieses Ausführungsbeispiel der Schwenklagerbolzen 27 länger ausgebildet als der Schwenklagerbolzen 28. Zur Bildung des Schutzbügel-Schwenklagers 43 tritt ein Endbereich des Schutzlagerbolzens 27 durch ein Lagerauge der Schutzbügel-Schwenkteils 41 hindurch. Das Sicherungselement 39 ist dann so auf dem Schwenklagerbolzen 27 angeordnet, dass mit kleinem Spiel zu Ermöglichung der Schwenkbewegung um das Schutzbügel-Schwenklager 43 das Schutzbügel-Befestigungsteil 42 und die Lagerplatte 37 des Schutzbügel-Schwenkteils 41 zwischen der Säulenplatte 26 und dem Sicherungselement 39 gefangen sind.

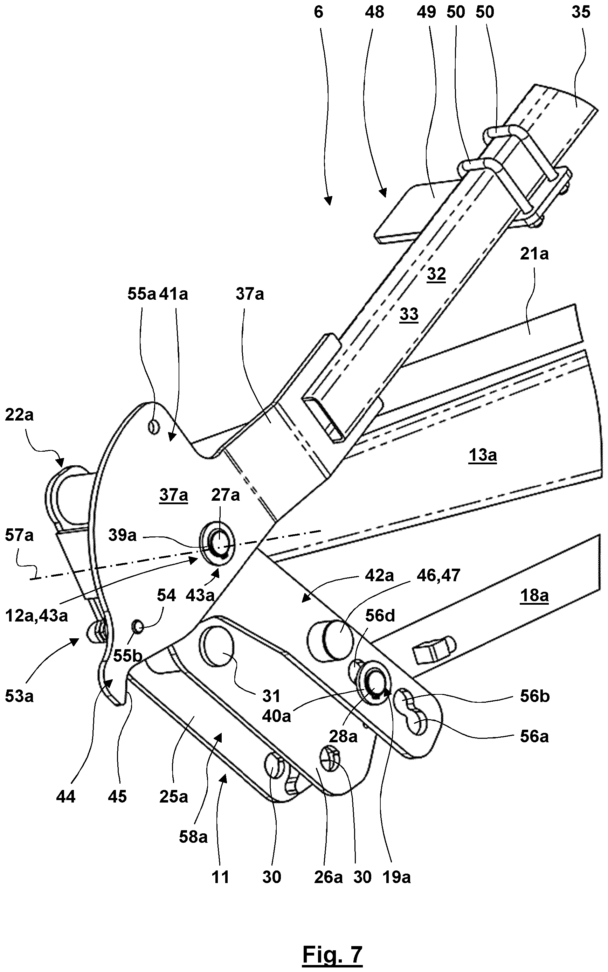

Wie insbesondere in **Fig. 7** zu erkennen ist, verfügt der Überrollbügel 5 über eine Arretiereinrichtung 44. Zur Bildung der Arretiereinrichtung 44 verfügt das Schutzbügel-Schwenkteil 41 beabstandet von dem Schutzbügel-Schwenklager 43 über einen Anschlag 45, der für das dargestellte Ausführungsbeispiel als Anschlagvorsprung oder Anschlaghaken ausgebildet ist. Das Schutzbügel-Befestigungsteil 42 kann dann einen Anschlag 46 aufweisen. Für das dargestellte Ausführungsbeispiel ist der Anschlag 46 als ein ausgeformter Vorsprung 47 des Schutzbügel-Befestigungsteils 42 ausgebildet. Alternativ möglich ist, dass der Anschlag 46 von einem auskragenden Endbereich des Schwenklagerbolzens 28 ausgebildet ist. Bewegt sich der Schutzbügel 6 von der Vorratsstellung in die Schutzstellung, kommen die Anschläge 45, 46 mit dem Erreichen der Schutzstellung einander zur Anlage, womit die Schutzstellung (in eine Richtung) arretiert ist.

Optional möglich ist, dass der Schutzbügel 6, insbesondere das Rahmenteil 33, einen Anschlag 48 trägt. Für das dargestellte Ausführungsbeispiel ist der Anschlag 48 als Anschlagplatte 49 ausgebildet, die über U-förmige, das Rahmenteil 33 umgreifende Befestigungsklammern 50 an dem Rahmenteil 33 gehalten ist. Der Anschlag 48 kann einerseits zur Vorgabe der Vorratsstellung durch Anlage an eine Komponente des Arbeitsfahrzeugs 2 oder Frontladers 3, insbesondere die Schwinge 13, dienen. Wie in Fig. 6 zu erkennen ist, kann aber der Anschlag 48 in der anderweitig vorgegebenen Vorratsstellung auch beabstandet von der Schwinge 13 angeordnet sein. In diesem Fall ist eine Bewegung der Schwinge 13 aus der abgesenkten Stellung über einen Teilhub möglich, bis die Schwinge 13 an dem Anschlag 48 zur Anlage kommt. Mittels des Anschlags 48 kann somit ein reduzierter maximaler Hub der Schwinge 13 vorgegeben werden, wenn sich der Schutzbügel 6 in der Vorratsstellung befindet. Hierbei kann der mittels des Anschlags 48 zugelassene Teilhub so dimensioniert sein, dass sich mit Erreichen des Anschlags 48 die Schwinge 13 in einer horizontalen Ausrichtung befindet oder diese noch geringfügig nach vorne geneigt ist. Ebenfalls möglich ist, dass der Teilhub ein zugelassener Montagehub ist, der genutzt werden kann, um an dem Frontlader 3 ein Arbeitswerkzeug 16 zu befestigen oder nach der Kopplung des Frontladers 3 mit dem Arbeitsfahrzeug 2 ein geringes Anheben des Arbeitswerkzeugs 16 zu ermöglich, sodass ein Fahrbetrieb der Arbeitsfahrzeugkombination 1 möglich ist. Möglich ist auch, dass der Anschlag 48 einen Mitnehmer bildet, der dazu führt, dass mit einem Anheben der Schwinge 13 automatisch der Schutzbügel 6 aus der Vorratsstellung in Richtung der Schutzstellung bewegt wird.

Optional möglich ist, dass der Schutzbügel 6, insbesondere ein Dachrahmen 38, einen Abstütz- oder Arretierabschnitt 51 aufweist. Mit dem Abstütz- oder Arretierabschnitt 51 kann der Schutzbügel 6 an einem entsprechenden Abstütz- oder Arretierabschnitt 52 des Überrollbügels 5 abgestützt sein, womit die Schutzstellung des Schutzbügels 6 vorgegeben sein kann, oder es kann hier ein Arretieren oder Befestigen erfolgen.

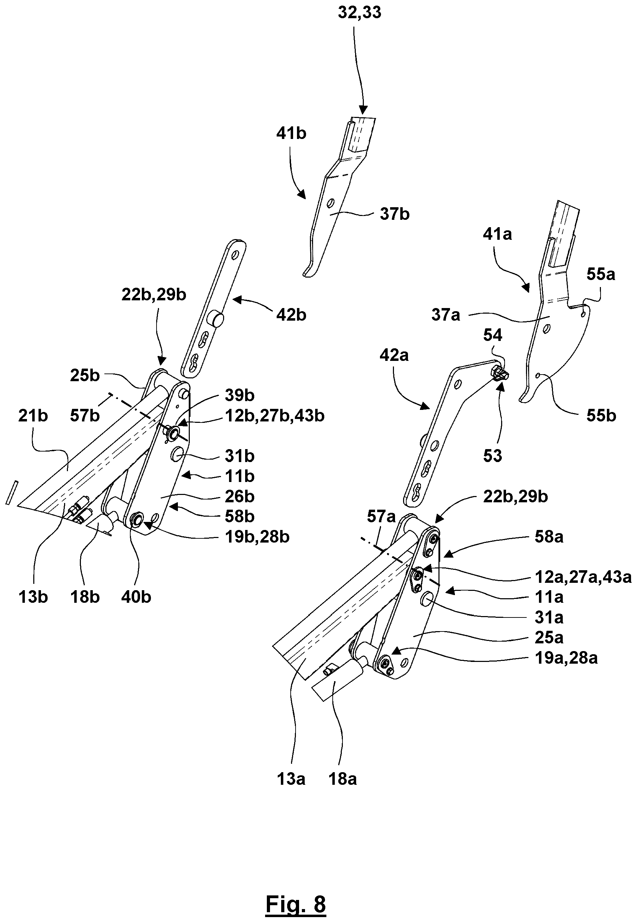

Möglich ist, dass die Schutzstellung und/oder die Vorratsstellung des Schutzbügels 6 mittels einer Arretiereinrichtung 53 gesichert ist. Vorzugsweise handelt es sich bei der Arretiereinrichtung 53 um eine Rast- und/oder Verriegelungseinrichtung. Wie in Fig. 7 und 8 zu erkennen ist, ist an dem Schutzbügel-Befestigungsteil 42 ein federbeaufschlagtes Rastelement 54, insbesondere eine Rastkugel oder ein Raststift, vertikal zur Schwenkebene des Schutzbügels 6 verschieblich geführt. Das Rastelement 54 kann in der Schutzstellung sowie in der Vorratsstellung in einer Rastausnehmung 55a, 55b des Schutzbügel-Schwenkteils 41 verrasten oder verriegeln.

In Fig. 7 und 8 ist zu erkennen, dass das Schutzbügel-Befestigungsteil 42 mehrere, hier vier Befestigungsbohrungen 56a, 56b, 56c, 56d aufweist. Hierbei sind die Befestigungsbohrungen 56 randgeschlossen ausgebildet oder diese können ineinander übergehen. Die unterschiedlichen Befestigungsbohrungen 56 dienen der Befestigung desselben Schutzbügels 6 mit demselben Schutzbügel-Befestigungsteils 42 an Säulen 11 mit unterschiedlichen Geometrien und insbesondere unterschiedlichen Positionen der Anordnung der Schwenklagerbolzen 28, die für die Befestigung des Schutzbügel-Befestigungsteils 42 an der Säule 11 genutzt werden.

Die Säule 11 weist einen Kopplungsbereich 58 auf, im Bereich dessen die Säule 11 an einem Kopplungsbereich 59 des Anbauturms 7 lösbar befestigt werden kann. Für das dargestellte Ausführungsbeispiel besteht diese Kopplung einerseits durch eine Aufnahme des Koppelbolzens 31 in einer randoffenen Aufnahme 60 des Anbauturms 7 sowie andererseits in der Aufnahme eines eingesteckten und gesicherten Koppelbolzens 61 in Koppelbolzenbohrungen 30 der Säule 11 und des Anbauturms 7.

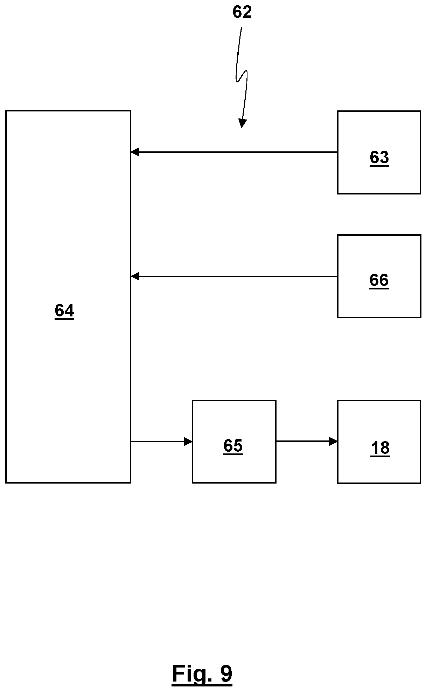

**Fig. 9** zeigt sehr schematisch eine Überwachungs-, Steuer- oder Regeleinrichtung 62 für eine Arbeitsfahrzeugkombination 1. Mittels eines Sensors 63, der beispielweise ein Weg- oder Drehwinkelsensor sein kann, wird die Hubstellung oder Hubbewegung der Schwinge 13 erfasst. Das Signal des Sensors 63 wird einer Steuereinrichtung 64 zugeführt. Die Steuereinrichtung 64 steuert über eine Ventileinrichtung 65 die hydraulische Beaufschlagung des Hubzylinders 18. Hierbei erfolgt die Ansteuerung des Hubzylinders 18 durch die Steuereinrichtung 64 über die Ventileinrichtung 65 so, dass die gewünschten Hubbewegungen und Hubkräfte an dem Frontlader 4 herbeigeführt werden. Mittels eines Sensors 66 kann detektiert werden, ob ein Schutzbügel 6 montiert ist oder nicht. Alternativ oder kumulativ kann mittels des Sensors 66 oder eines weiteren Sensors detektiert werden, ob sich ein montierter Schutzbügel 6 in der Vorratsstellung oder der Schutzstellung (oder auch einer Zwischenstellung) befindet. Signalisiert der Sensor 66, dass kein Schutzbügel 6 montiert ist oder sich der Schutzbügel 6 nicht in der Schutzstellung befindet, kann die Steuereinrichtung 66 die Ventileinrichtung 65 so ansteuern, dass kein Anheben der Schwinge 13 möglich ist oder lediglich ein Anheben der Schwinge 13 bis zu einer reduzierten maximalen Hubhöhe möglich ist, in der vorzugsweise die Schwinge 13 nach vorne geneigt ist. Hierbei können die Steuereinrichtung 34 und/oder die Ventileinrichtung 65 an dem Arbeitsfahrzeug 2 oder an dem Frontlader 3 angeordnet sein.

### BEZUGSZEICHENLISTE

- 1: Arbeitsfahrzeugkombination
- 2: Arbeitsfahrzeug
- 3: Frontlader
- 4: Fahrersitz
- 5: Überrollbügel
- 6: Schutzbügel
- 7: Anbauturm
- 8: Anbauturmteil
- 9: Anbauturmteil
- 10: Abstützstrebe
- 11: Säule
- 12: Schwenklager Schwinge - Säule
- 13: Schwinge
- 14: Schwingenteil
- 15: Schwingenteil
- 16: Arbeitswerkzeug
- 17: Schaufel
- 18: Hubzylinder
- 19: Schwenklager Hubzylinder - Säule
- 20: Umlenkelement
- 21: Steuerstange
- 22: Schwenklagers Steuerstange - Säule
- 23: Arbeitswerkzeugzylinder
- 24: Abstellmechanismus
- 25: Säulenplatte
- 26: Säulenplatte
- 27: Schwenklagerbolzen
- 28: Schwenklagerbolzen
- 29: Schwenklagerbolzen
- 30: Koppelbolzenbohrung
- 31: Koppelbolzen
- 32: Schutzbügelkörper
- 33: Rahmenteil
- 34: Grundschenkel
- 35: Seitenschenkel
- 36: Seitenschenkel
- 37: Lagerplatte
- 38: Dachrahmen
- 39: Sicherungselement
- 40: Sicherungselement
- 41: Schutzbügel-Schwenkteil
- 42: Schutzbügel-Befestigungsteil
- 43: Schutzbügel-Schwenklager
- 44: Arretiereinrichtung
- 45: Anschlag
- 46: Anschlag
- 47: Vorsprung
- 48: Anschlag
- 49: Anschlagplatte
- 50: Befestigungsklammer
- 51: Abstütz- oder Arretierabschnitt
- 52: Abstütz- oder Arretierabschnitt
- 53: Arretiereinrichtung
- 54: Rastelement
- 55: Rastausnehmung
- 56: Befestigungsbohrung
- 57: Schwenkachse
- 58: Kopplungsbereich
- 59: Kopplungsbereich
- 60: Aufnahme
- 61: Koppelbolzen
- 62: Überwachungs-, Steuer- oder Regeleinrichtung
- 63: Sensor
- 64: Steuereinrichtung
- 65: Ventileinrichtung
- 66: Sensor
- 67: Halterung

## Patentansprüche

1. Frontlader (3) mit
a) einer Säule (11) mit einem Kopplungsbereich (58) für die Kopplung des Frontladers (3) an einem Anbauturm (7) eines Arbeitsfahrzeugs (2),
b) einer verschwenkbar um eine Schwenkachse (57) an der Säule (11) gehaltenen Schwinge (13) und
c) einem Schutzbügel (6), der an der Säule (11) gehalten ist und sich von einer Schwenkachse (57) der Schwinge (13) nach oben und hinten erstreckt und eingerichtet ist, bei an dem Arbeitsfahrzeug (2) montiertem Frontlader (3) und angehobener Schwinge (13) eine Bedienungsperson des Arbeitsfahrzeugs (2) zu schützen.

2. Frontlader (3) nach Anspruch 1, **wobei** die Konfiguration des Schutzbügels (6) veränderbar ist zwischen einer Schutzstellung und einer Vorratsstellung.

3. Arbeitsfahrzeug (2) mit
a) einem Anbauturm (7) mit einem Kopplungsbereich (59) für die Kopplung des Arbeitsfahrzeugs (2) mit einer Säule (11) eines Frontladers (3) und
b) einem Schutzbügel (6), der an dem Anbauturm (7) gehalten ist und sich von dem Anbauturm (7) nach oben und hinten erstreckt und eingerichtet ist, bei an dem Arbeitsfahrzeug (2) montiertem Frontlader (3) und angehobener Schwinge (13) eine Bedienungsperson des Arbeitsfahrzeugs (2) zu schützen,
c) wobei die Konfiguration des Schutzbügels (6) veränderbar ist zwischen einer Schutzstellung und einer Vorratsstellung.

4. Arbeitsfahrzeug (2) oder Frontlader (3) nach einem der vorhergehenden Ansprüche, **wobei** der Schutzbügel (6) verschwenkbar ist zwischen der Schutzstellung und der Vorratsstellung.

5. Arbeitsfahrzeug (2) oder Frontlader (3) nach einem der vorhergehenden Ansprüche, **wobei** der Schutzbügel (6) einen mechanischen Anschlag (45, 46) aufweist, der die Vorratsstellung oder die Schutzstellung vorgibt.

6. Arbeitsfahrzeug (2) oder Frontlader (3) nach einem der vorhergehenden Ansprüche, **wobei** der Schutzbügel (6) einen mechanischen Anschlag (48) aufweist, an den eine mit der Hubbewegung des Frontladers (3) bewegte Komponente dann, wenn sich der Schutzbügel (6) in der Vorratsstellung befindet und die Komponente aus einer abgesenkten Stellung in eine Anschlagstellung angehoben wird, zur Anlage kommt, wobei vorzugsweise
- dann, wenn sich der Schutzbügel (6) in der Vorratsstellung befindet und die Komponente in der Anschlagstellung ist, die Schwinge (13) nach vorne geneigt ist, und/oder
- die Schwinge (3) zwischen der abgesenkten Stellung und der Anschlagstellung einen Montagehub ausführt.

7. Arbeitsfahrzeug (2) oder Frontlader (3) nach einem der vorhergehenden Ansprüche, **wobei** ein Sensor (66) vorhanden ist, welcher das Vorhandensein eines Schutzbügels (6) und/oder eine Konfiguration des Schutzbügels (6) erfasst, wobei vorzugsweise eine Steuereinrichtung (64) des Arbeitsfahrzeugs (2) oder Frontladers (3) eingerichtet ist, eine Bewegung der Schwinge (13) des Frontladers (3) in Abhängigkeit von einem Signal des Sensors zu steuern.

8. Arbeitsfahrzeug (2) oder Frontlader (3) nach Anspruch 7, **wobei** eine Ventileinrichtung (65) und/oder eine Steuereinrichtung (64) vorhanden ist, welche dazu eingerichtet sind/ist, bei nicht vorhandenem Schutzbügel (6) oder dann, wenn der Schutzbügel (6) nicht in der Schutzstellung ist, einen Arbeitsdruck eines Hubzylinders (18), welcher die Schwinge (13) anhebt, zu begrenzen.

9. Arbeitsfahrzeug (2) oder Frontlader (3) nach Anspruch 7 oder 8, **wobei** die Steuereinrichtung (64) und/oder die Ventileinrichtung (65) eingerichtet sind/ist, eine maximale Hubhöhe der Schwinge (13) in Abhängigkeit von dem Signal des Sensors (66) zu begrenzen.

10. Arbeitsfahrzeug (2) oder Frontlader (3) nach einem der vorhergehenden Ansprüche, **wobei** der Schutzbügel (6) einen Abstütz- oder Arretierabschnitt (51) aufweist, über den der Schutzbügel (6) an einem Überrollbügel (5) abgestützt oder arretiert werden kann, wodurch die Schutzstellung vorgegeben ist.

11. Arbeitsfahrzeug (2) oder Frontlader (3) nach einem der vorhergehenden Ansprüche, **wobei** der Schutzbügel (6) Streben aufweist, zwischen denen sich ein Quer- oder Flächenschutz erstreckt.

12. Arbeitsfahrzeug (2) oder Frontlader (3) nach einem der vorhergehenden Ansprüche, **wobei**
a) der Schutzbügel (6) über mindestens einen Befestigungs- oder Schwenklagerbolzen (27, 28) gehalten oder gelagert ist und/oder
b) ein Anschlag (46) für die Vorgabe der Schutzstellung und/oder der Vorratsstellung durch einen Befestigungs- oder Schwenklagerbolzen (28) bereitgestellt wird,
der einem Befestigen oder einer schwenkbaren Lagerung einer Komponente des Frontladers (3) an der Säule (11) des Frontladers (2) oder der Kopplung des Anbauturms (7) des Arbeitsfahrzeugs (2) mit der Säule (11) des Frontladers (3) dient.

13. Arbeitsfahrzeug (2) oder Frontlader (3) nach einem der vorhergehenden Ansprüche, **wobei** die Schutzstellung und/oder die Vorratsstellung des Schutzbügels (6) mittels einer Arretiereinrichtung (53) gesichert sind/ist.

14. Arbeitsfahrzeug (2) oder Frontlader (3) nach einem der vorhergehenden Ansprüche, **wobei** der Schutzbügel (6) derart mechanisch mit der Schwinge (13) des Frontladers (3) gekoppelt oder koppelbar ist, dass
a) mit einer Hubbewegung der Schwinge (13) eine Bewegung des Schutzbügels (6) in die Schutzstellung und/oder
b) mit einer Absenkbewegung der Schwinge (13) eine Bewegung des Schutzbügels (6) in die Vorratsstellung
herbeiführbar ist.

15. Arbeitsfahrzeug (2) oder Frontlader (3) nach einem der vorhergehenden Ansprüche, **wobei** der Schutzbügel (6)
a) ein Schutzbügel-Befestigungsteil (42), über welches der Schutzbügel (6) an der Säule (11) des Frontladers (3) oder an dem Anbauturm (7) des Arbeitsfahrzeugs (2) befestigt ist, und
b) ein Schutzbügel-Schwenkteil (41)
aufweist, die über ein Schutzbügel-Schwenklager (43) verschwenkbar miteinander verbunden sind,
wobei vorzugsweise das Schutzbügel-Befestigungsteil (42)
- einen Anschlag (46) aufweist, an dem für die Vorgabe der Vorratsstellung und/oder die Vorgabe der Schutzstellung ein Anschlag (45) des Schutzbügel-Schwenkteils (41) zur Anlage kommt, und/oder
- ein Paar von Befestigungsbohrungen (56) aufweist, über die das Schutzbügel-Befestigungsteil (42) mit Befestigungs- oder Schwenklagerbolzen (27, 28) an der Säule (11) oder dem Anbauturm (7) befestigt ist, wobei insbesondere mehrere Paare von Befestigungsbohrungen (56) für unterschiedliche Typen von Säulen (11) oder Anbautürmen (7) vorhanden sind.

16. Arbeitsfahrzeugkombination (1) mit einem Arbeitsfahrzeug (2) und einem daran montierten Frontlader (3), wobei das Arbeitsfahrzeug (2) oder der Frontlader (3) nach einem der vorhergehenden Ansprüche ausgebildet ist.

17. Gruppe von Arbeitsfahrzeugkombinationen (1)
a) mit einer ersten Teilgruppe von Arbeitsfahrzeugkombinationen (1) nach Anspruch 16 und
b) mit einer zweiten Teilgruppe von Arbeitsfahrzeugkombinationen, die ein Arbeitsfahrzeug (2) und einen Frontlader (3) mit einer Säule (11) mit einem Kopplungsbereich für die Kopplung des Frontladers (3) an einem Anbauturm (7) des Arbeitsfahrzeugs (2) und eine verschwenkbar an der Säule (11) gehaltenen Schwinge (13), aber keinen Schutzbügel (6) aufweisen,
c) wobei die Säulen (11) der Arbeitsfahrzeugkombinationen (1) der ersten und zweiten Teilgruppen baugleich ausgebildet sind, aber sich unterschiedlich lange Befestigungsbolzen und/oder Schwenklagerbolzen (27, 28) durch die Säulen (11) der Arbeitsfahrzeugkombinationen (1) der ersten und zweiten Teilgruppen erstrecken.

18. Schutzbügel (6) für einen Umbau eines Frontladers (3) oder eines Arbeitsfahrzeugs (2) ohne Schutzbügel (6) zu einem Frontlader (3) oder Arbeitsfahrzeug (2) nach einem der Ansprüche 1 bis 15
a) mit einem Schutzbügel-Befestigungsteil (42), über welches der Schutzbügel (6) an einer Säule (11) des Frontladers (3) oder dem Anbauturm (7) des Arbeitsfahrzeugs (2) befestigbar ist, und
b) mit einem Schutzbügel-Schwenkteil (41),
c) wobei das Schutzbügel-Befestigungsteil (42) und das Schutzbügel-Schwenkteil (41) über ein Schutzbügel-Schwenklager (43) verschwenkbar miteinander verbunden sind,
wobei vorzugsweise das Schutzbügel-Befestigungsteil (42)
- einen Anschlag (46) aufweist, an dem für die Vorgabe der Vorratsstellung und/oder die Vorgabe der Schutzstellung ein Anschlag (45) des Schutzbügel-Schwenkteils (41) zur Anlage kommt, und/oder
- ein Paar von Befestigungsbohrungen (56) aufweist, über die das Schutzbügel-Befestigungsteil (42) mit Befestigungs- oder Schwenklagerbolzen (27, 28) an der Säule (11) oder dem Anbauturm (7) befestigt ist, wobei insbesondere mindestens zwei Paare von Befestigungsbohrungen (56) für unterschiedliche Typen von Säulen (11) und/oder Anbautürmen (7) vorhanden sind.
